# EUROPÄISCHE PATENTSCHRIFT

(11) **EP 1 198 982 B1**
(45) Veröffentlichungstag und Bekanntmachung des Hinweises auf die Patenterteilung: **14.07.2004**
(21) Anmeldenummer: 01123623.9
(22) Anmeldetag: 02.10.2001
(51) Int. Cl.: A01F 29/20

(54) **Einstellvorrichtung für den Schneidspalt an Häckslern**
Shredder with shear bar adjusting device
Hacheuse munie d'un dispositif de réglage du contre-couteau

(30) Priorität: 18.10.2000 DE 10051553
(43) Veröffentlichungstag der Anmeldung: 24.04.2002
(73) Patentinhaber: Case Harvesting Systems GmbH, 01844 Neustadt (DE)
(72) Erfinder: Einighammer, Hans Joseph, Dr., 40225 Düsseldorf (DE); Hauke, Rudolph, Dr., 89168 Niederstotzingen (DE)
(74) Vertreter: Müller, Lutz

(56) Entgegenhaltungen:
- EP-A- 0 291 216
- EP-A- 1 072 185
- FR-A- 2 537 832
- FR-A- 2 650 723
- US-A- 4 335 569
- US-A- 4 412 212
- US-A- 4 479 346

## Beschreibung

Die Erfindung betrifft eine Einstellvorrichtung für den Schneidspalt an Häckslern zur Verarbeitung landwirtschaftlicher Emtegüter, forstwirtschaftlicher Kulturen sowie für sogenannte nachwachsende Rohstoffe mit den Merkmalen nach dem Oberbegriff des Patentanspruches 1.

Derartige Häcksler befinden sich vorzugsweise als Arbeitsaggregat in gezogenen oder selbstfahrenden Feldhäckslern, stationären Häckselmaschinen oder als Zusatzbaugruppe in anderen landwirtschaftlichen Erntemaschinen, wie beispielsweise in Mähdreschern zum Zerkleinern des ausgedroschenen Strohs. Sie weisen eine rotierende Häckseltrommel mit an deren Umfang schrauben- bzw. keilförmig angeordneten oder aus kurzen Segmenten bestehende Häckselmesser auf. Diese wirken mit einer quer zur Fahrtrichtung zeigenden und horizontal ausgerichteten Gegenschneide zusammen, die beidseitig nahe der Häckseltrommel am Häckseltrommelgehäuse befestigt ist, so daß das Häckselgut über die Gegenschneide den Häckselmessem zugeführt und durch deren Zusammenwirken in kleine Stücke geschnitten wird.

Mit fortlaufendem Einsatz werden jedoch die Häckselmesser stumpf, so daß sie von einer in den Häcksler integrierten Schleifeinrichtung relativ häufig nachgeschliffen werden müssen. Da für das Einhalten der gewünschten Häcksellänge und zur Minimierung der Antriebsleistung für die Häckseltrommel neben scharfen Häckselmessern ein sehr enger Schneidspalt notwendig ist, muß nach jedem Nachschleifen die Einstellung der Gegenschneide zu den Häckselmessern neu vorgenommen werden. So ist es beispielsweise bei selbstfahrenden Feldhäckslern mit einem hohen Durchsatz an Häckselgut üblich, diesen Einstellvorgang durch den Bediener vom Fahrerstand aus vorzunehmen.

Einstellvorrichtungen für die Gegenschneide an Häckslern sind bereits in einigen Ausführungsvarianten bekannt geworden, die im Anwendungsfall an Feldhäckslern nun näher erläutert werden sollen.

Es ist aus der DE 29 26 538 C2 bekannt, die Gegenschneide mit einem beidseitig an ihr und am Häckseltrommelgehäuse angeordneten Einstellmechanismus auf die mit Häckselmessern besetzte rotierende Häckseltrommel zu und von dieser weg zu bewegen. Das ist völlig unabhängig voneinander auf beiden Seiten möglich. Zur Verstellung selbst dienen mit Schraubspindeln verbundene Elektromotoren, die nach beendetem Schleifen der Häckselmesser zuerst die eine Seite der Gegenschneide auf Knopfdruck des Bedieners an die Häckselmesser bis zu deren Kontakt heran stellen und danach die andere. Der Zustellvorgang wird dann vom Bediener manuell unterbrochen, wenn er aufgrund des Kontaktes ein Ticken hört. Nachteilig an dieser Einstellvorrichtung ist einmal deren Ungenauigkeit durch die undefinierte Reaktionszeit des Bedieners. Zum anderen ist dieser Einstellvorgang zeitraubend und er erfordert, daß der Bediener den Fahrerstand verläßt. Schließlich kann ein Bedienungsfehler zur Zerstörung des gesamten Häckslers führen.

Mit der EP 0 291 216 B1 ist eine weitere Einstellvorrichtung für den Schneidspalt zwischen der Gegenschneide und den Häckselmessern bekannt geworden, bei der der Einstellvorgang weitestgehend automatisiert wurde. Dazu werden den Kontakt zwischen der Gegenschneide und den Häckselmessern signalisierende Meßeinrichtungen eingesetzt, was in diesem Fall auf Schwingungen ansprechende Klopfsensoren sind. Je ein Klopfsensor ist hierfür im Bereich der Gegenschneide auf deren linken und rechten Seite angebracht, deren Signale einem Mikroprozessor und einer Steuervorrichtung zugeleitet werden. Diese Einrichtungen sorgen dafür, daß ab einer bestimmten Größe der Signale der Zustellvorgang der Gegenschneide auf der einen Seite abgebrochen und danach auf der anderen Seite eingeleitet wird. Nach jedem Kontakt stellt die Steuervorrichtung durch Umsteuern der Drehrichtung der Elektromotoren wieder die Gegenscheide ein Stück von den Häckselmessern weg. Diese Vorgänge werden so lange wiederholt, bis die Gegenschneide den gewünschten Schneidspalt zu den Häckselmessern aufweist und sie sich in einer parallelen Position zu diesen befindet.

Obwohl der Einstellvorgang automatisch abläuft, haften dieser Einstellvorrichtung dennoch einige Nachteile an. Das ist einmal deren Funktionsunsicherheit, weil mechanische bzw. akustische Störsignale aus dem Umfeld des Häckslers, zum Beispiel vom Antriebssystem verursachter Körperschall und sonstige Betriebsstörpegel, die Signalaufnahme aus dem Kontakt zwischen der Gegen-Ischneide und den Häckselmessern stören. Um diesen Nachteil in Grenzen zu halten, sind Tiefpaßfilter zur Signalaufbereitung nötig, die jedoch die Herstellungskosten für die Einstellvorrichtung erhöhen. Des weiteren sind Klopfsensoren an sich störanfällig, was sich durch deren ungünstigen Ort der Anbringung im mit Erntegut, Feuchtigkeit und Schmutz am meisten belasteten Bereich noch negativer auswirkt. Da es zur Erzeugung eines vom Klopfsensor erkennbaren Signals zu einem ziemlich heftigen Kontakt zwischen der Gegenschneide und den Häckselmessern kommen muß, unterliegen diese dadurch einem unnötig hohen Verschleiß. Dieses nahe Heranstellen der Gegenschneide führt logischerweise zu einem längeren Rückstellweg und darüber hinaus zu einer Erhöhung der Anzahl der Zu- und Rückstellvorgänge der Gegenschneide bis zu ihrer endgültig parallelen Position zu den Häckselmessern, wodurch der Einstellvorgang relativ lange dauert. Schließlich wären noch die Einsatzgrenzen dieser Einstellvorrichtung zu erwähnen, da sie nicht in der Lage ist, die Kontaktstelle weder am Umfang noch innerhalb der Breite der Häckseltrommel zu lokalisieren.

Der Vollständigkeit halber ist noch auf die Einstellvorrichtung des Schneidspaltes nach der DE 43 35 786 A1 hinzuweisen, die prinzipiell gleich wie die nach der EP 0 291 216 B1 aufgebaut ist. Der Unterschied liegt lediglich in einer verbesserten Signalaufbereitung, wobei die Signale der Klopfsensoren jeweils einer Tiefpaßschaltung und zusätzlich einer nachgeschalteten Schwellwertschaltung zugeführt werden, so daß an deren Ausgängen die Impulssignale entstehen. In einer Ausführung sind die beiden Impulssignale in einem ODER-Gatter verknüpft. Dieses gemeinsame Impulssignal wird dann einem Zähler an dessen Zähleingang und einem retriggerbaren Zeitglied sowie der Steuervorrichtung zugeführt. Alternativ werden die beiden Impulssignale in einem Antivalenzgatter verknüpft und so ebenfalls dem Zähler sowie der Steuervorrichtung zugeführt. Nachteilig an dieser Einstellvorrichtung ist, daß die an der Lösung nach der EP 0 291 216 B1 bereits bemängelte Funktionsunsicherheit lediglich etwas abgeschwächt wird und die übrigen Nachteile vollinhaltlich bestehen bleiben. Als weiterer Nachteil kommt hinzu, daß die beschriebenen Maßnahmen zur Funktionsverbesserung die Herstellungskosten noch weiter erhöhen.

Deshalb liegt der Erfindung die Aufgabe zugrunde, eine Einstellvorrichtung für den Schneidspalt an Häckslern zu schaffen, die mit hoher Funktionssicherheit schon die kleinste Berührung zwischen der Gegenschneide und wenigstens einem Häckselmesser einer Häckseltrommel signalisiert, die störunanfällig ist, deren Herstellungskosten gering sind, die während des Einstellvorganges an der Gegenschneide und den Häckselmessern keinen Verschleiß verursacht, die eine Einstellung des Schneidspalts in kürzerer Zeit ermöglicht und die die Kontaktstelle zwischen der Gegenschneide und den Häckselmessern am Umfang und innerhalb der Breite der Häckseltrommel lokalisieren kann.

Diese Aufgabe wird durch den Gegenstand des Patentanspruches 1 gelöst, wobei in den Unteransprüchen Merkmale aufgeführt sind, die die Erfindung in vorteilhafter Weise weiterentwickeln.

Durch die beidseitig elektrisch leitenden Verbindungen der Gegenschneide, gegebenenfalls unter Einbeziehung des Gegenschneidenträgers, mit den beiden Armen des Einstellmechanismus und die sich daran anschließenden elektrisch leitenden Verbindungen der Arme mit dem Häckseltrommelgehäuse sowie die elektrisch leitend im Häckseltrommelgehäuse aufgenommene und mit Häckselmessern besetzte Häckseltrommel ist ein elektrischer Leiterkreis entstanden, in dem die Gegenschneide mit dem Gegenschneidenträger über die beiden Arme des Einstellmechanismus mit dem Häckseltrommelgehäuse sowie der Häckseltrommel mit den Häckselmessern parallelgeschaltet sind. Aufgrund der relativ großen Querschnitte aller genannten Bauteile handelt es sich hierbei um einen niederohmigen elektrischen Leiterkreis, in dem sich die Gegenschneide und die Häckselmesser mit einem Spannungsunterschied gegenüberstehen können, solange zwischen ihnen ein Schneidspalt vorhanden ist.

Dieser Spannungsunterschied kann erzeugt werden, wenn im Bereich jedes Armes ein wie ein Transformator funktionierender und bezüglich der Windungsdaten völlig gleich aufgebauter magnetischer Sendekreis angeordnet ist, wobei die Primärseiten als symmetrisch miteinander verschaltete Sendespulen ausgebildet sind. Sie sind völlig gleich gewickelt und so gepolt, daß ihre Magnetflüsse beim Anliegen einer Wechselstromquelle in entgegengesetzte Richtungen zeiden. Die Sekundärseiten der magnetischen Sendekreise werden von den beiden Armen des Einstellmechanismus als Teilstücke des elektrischen Leiterkreises selbst gebildet, die damit als Sekundärwicklungen für die magnetischen Sendekreise fungieren und in dem Fall aus nur einer "Windung" bestehen. Die in ihnen induzierten Spannungen sind entgegengesetzt gerichtet und gleich groß, wodurch der bereits vorstehend erwähnte Spannungsunterschied zwischen der Gegenschneide und den Häckselmessern beim Vorhandensein eines Schneidspaltes entsteht. Der ist genau so groß wie die induzierten Spannungen in den Armen, da die beiden den induzierten Spannungen entsprechenden EMK-Quellen über die Gegenschneide mit dem Gegenschneidenträger einerseits und über die Häckseltrommel mit den Häckselmessern und das Häckseltrommelgehäuse andererseits bei gleichsinniger Polung parallelgeschaltet sind. Der elektrische Leiterkreis bleibt jedoch stromlos, so lange zwischen der Gegenschneide und den Häckselmessern ein Schneidspalt vorhanden ist.

Wird nun der Einstellmechanismus so weit betätigt, daß die Häckselmesser wenigstens an einer Stelle die Gegenschneide berühren, fließt über diese Kontaktstelle ein Strom, der sich dann aus den im elektrischen Leiterkreis fließenden Teilströmen zusammensetzt, die zu gleichen Teilen aus den EMK-Quellen aus den Sekundärseiten der magnetischen Sendekreise stammen. Diese Teilströme werden jeweils durch Messung der Magnetfelder um den stromführenden Leiter nach dem Prinzip der Stromzange mit magnetischen Empfangskreisen gemessen.

Dazu ist im Bereich jedes Armes ein wie ein Transformator funktionierender und bezüglich der Windungsdaten völlig gleich aufgebauter magnetischer Empfangskreis angeordnet, deren Primärseiten von den Armen des Einstellmechanismus als Teilstücke des elektrischen Leiterkreises gebildet werden, die symmetrisch verschaltet sind und in denen demzufolge die Magnetflüsse entgegengesetzt ausgerichtet sind. Die Sekundärseiten der magnetischen Empfangskreise sind unsymmetrisch miteinander verschaltete Empfangsspulen, die gleich gewickelt und so gepolt sind, daß die in ihnen induzierten Spannungen im Falle des Stromflusses im elektrischen Leiterkreis gleich ausgerichtet sind.

Dadurch kommt es im als Meßkreis ausgebildeten Stromkreis der Sekundärseiten zu einem Stromfluß, der das Kontaktsignal für die Berührung der Häckselmesser mit der Gegenschneide ist und das mit dem sich in diesem Meßkreis befindenden Strommesser erkannt werden kann. Außerdem ist dieser Meßkreis als Brückenschaltung aufgebaut, der mit zwei gleich großen Brückenwiderständen ausgestattet ist und über deren Brücke mit einem Spannungsmesser ständig eine Ausgangsspannung gemessen wird.

Befindet sich die Kontaktstelle zwischen der Gegenschneide und den Häckselmessern über die Breite der Häckseltrommel gesehen genau in der Mitte, ist die über die Brücke gemessene Ausgangsspannung gleich Null. Wenn sich jedoch die Kontaktstelle in einer außermittigen Position befindet, wird die Geometrie des elektrischen Leiterkreises unsymmetrisch, da sich die Anteile der Widerstände aus der Gegenschneide mit dem Gegenschneidenträger und der Häckseltrommel mit den Häckselmessern in den zwei Teilkreisen des elektrischen Leiterkreises verändern. Die Folge davon ist, daß die Ausgangsspannung über der Brücke einen positiven oder negativen Wert annimmt. Dabei ist der Einsatz von Strömen mit einer hohen Arbeitsfrequenz zu empfehlen, da dann der induktive Anteil der genannten Widerstände gegenüber dem ohmschen Anteil deutlich größer wird und damit besser meßbare Werte für die Ausgangsspannung entstehen.

Vorsorglich wird an dieser Stelle darauf verwiesen, daß der Schutzumfang der Erfindung auch dann nicht verlassen wird, wenn die magnetischen Sende- bzw. Empfangskreise nicht wie hier durchgängig beschrieben auf den beiden Armen des Einstellmechanismus angebracht werden. Sobald sie in der erfindungsgemäßen Art und Weise an anderen Stellen um den Strom führenden elektrischen Leiterkreis gelegt sind, gelten auch solche Lösungen als vom Schutzumfang betroffen.

In einer zweckmäßigen Ausgestaltung der Erfindung sollte die Wechselstromquelle in den Primärseiten der magnetischen Sendekreise eine Frequenz von wenigstens 150 Kilohertz aufweisen, damit die Kontaktimpulse auch sicher erkannt werden, weil dann in die Dauer eines Kontakts mehrere Schwingungen der Wechselspannung fallen.

Weiterhin hat es sich bewährt, bei einer Anordnung der magnetischen Sende-bzw. Empfangsspulen auf den Armen des Einstellmechanismus den Querschnitt beider Arme in Bezug auf ihre Größe der Querschnittsfläche und ihre Form völlig gleich auszubilden, weil das für die richtige Geometrie des elektrischen Leiterkreises von Bedeutung ist.

Ebenso verhält es sich mit der symmetrischen Anordnung der magnetischen Sende- und Empfangskreise auf den beiden Armen, weil ansonsten bei der Verwendung von beispielsweise konischen Armen ebenfalls die Geometrie des elektrischen Leiterkreises verschoben würde.

In einer bevorzugten Ausführungsvariante der Erfindung mit einem automatisch arbeitenden Einstellmechanismus werden der im Meßkreis der magnetischen Empfangskreise fließende Strom und die über dessen Brücke anliegende Ausgangsspannung einer Steuereinheit zugeführt, die diese Steuergrößen dazu benutzt, um beim gleichzeitigen beiderseitigen Zustellvorgang der Gegenschneide auf die Häckselmesser zuerst den Stellmotor auf der Seite zu stoppen, wo sich die Kontaktstelle befindet. Beim erneuten Kontakt auf der anderen Seite wird dann auch der zweite Stellmotor angehalten.

Schließlich ist es mit dieser Einstellvorrichtung auch möglich, das Häckselmesser am Umfang der Häckseltrommel zu orten, das die Gegenschneide zuerst berührt. Dazu ist auf der Häckseltrommel ein Permanentmagnet befestigt, der vorteilhafter Weise einem Häckselmesser zugeordnet wird. Ein Magnetfeldsensor, der beispielsweise am Gegenschneidenträger angebracht ist, registriert dann den

Vorbeigang des Permanentmagneten. Da in dieser Anordnung gleichzeitig die Umfangsgeschwindigkeit der Häckseltrommel gemessen werden kann und die Anzahl der Häckselmesser am Umfang bekannt ist, kann die Kontaktstelle jedes beliebigen Häckselmessers elektronisch über eine Prozessorfunktion dem betreffenden Häckselmesser zugeordnet werden. Der gleiche Effekt in einer derartigen Anordnung ist auch zu erreichen, wenn die Drehposition der Häckseltrommel mit gemessen wird.

Somit wären als Vorteile der Erfindung zu nennen, daß sie eine hohe Funktionssicherheit aufweist, weil bereits die kleinste Berührung eines Häckselmessers mit der Gegenschneide garantiert einen Stromfluß auslöst. Dadurch kommt es auch weder an der Gegenschneide noch an den Häckselmessern zumindest durch den Einstellvorgang zu keinem meßbaren Verschleiß. Da dieser kurze Kontakt schon zur Signalgewinnung genügt, läuft der Einstellvorgang in kurzer Zeit ab.

Die zur Einstellvorrichtung gehörenden Teile sind darüber hinaus völlig störunanfällig und unterliegen keinerlei Verschleiß beim betriebsgemäßen Einsatz. Der einfache Aufbau der Einstellvorrichtung und die geringe Anzahl der dafür notwendigen Teile halten auch noch die Herstellungskosten gering. Schließlich ist es mit dieser Einstellvorrichtung zusätzlich möglich, die Kontaktstelle zwischen der Gegenschneide und dem Häckselmesser am Umfang und innerhalb der Breite der Häckseltrommel zu lokalisieren.

Die Erfindung soll nun anhand eines Ausführungsbeispieles näher erläutert werden, wobei die einzelnen Figuren zeigen:
- Fig. 1:: eine schematische Darstellung der Einstellvorrichtung
- Fig. 2:: ein Ersatzschaltbild für die einen elektrischen Leiterkreis bildenden Teile Gegenschneide, Gegenschneidenträger, Einstellmechanismus, Häckseltrommelgehäuse und Häckseltrommel
- Fig. 3:: ein Ersatzschaltbild mit dem elektrischen Leiterkreis und den mit ihm verbundenen magnetischen Sende- und Empfangskreisen.

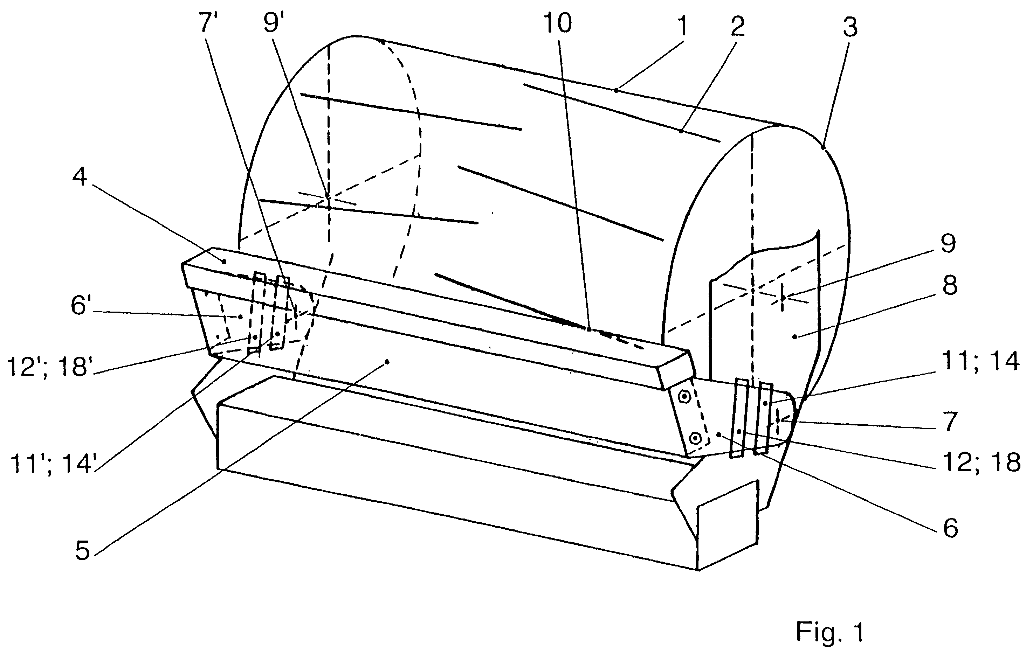

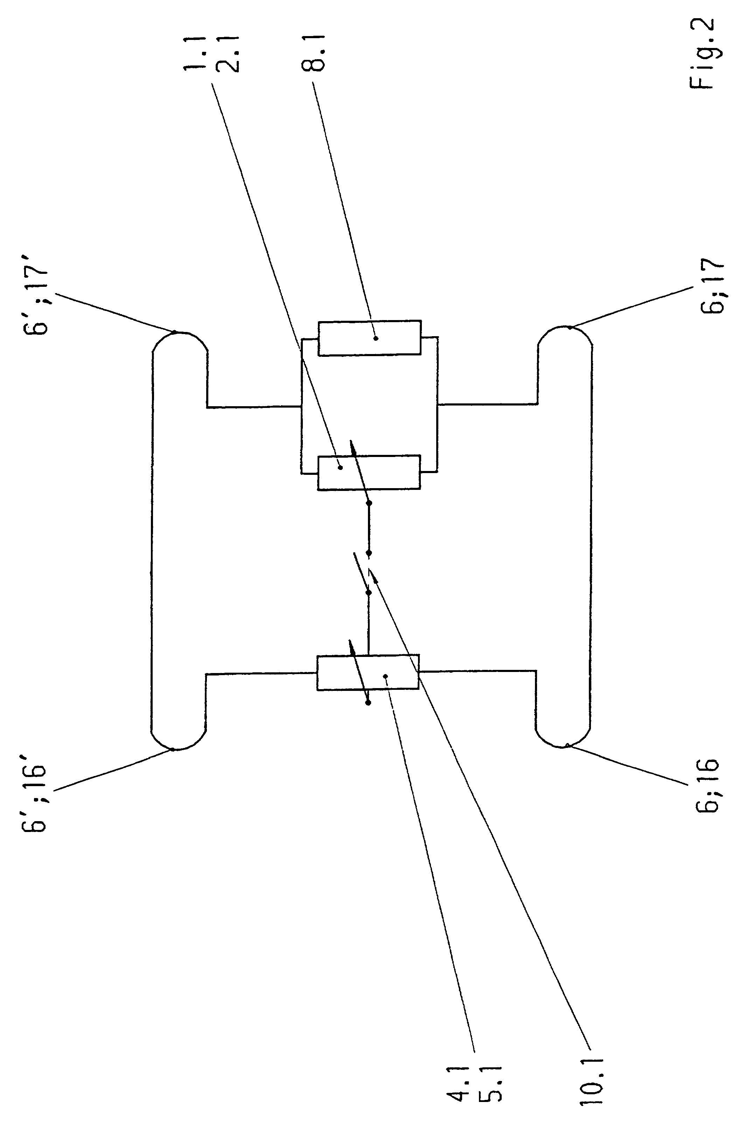

In Figur 1 ist einmal die Häckseltrommel 1 zu sehen, die mit pfeilförmig angeordneten Häckselmessern 2 besetzt ist. Deren radial vorstehende Schneidkanten bilden den Rotationskreis 3 der Häckseltrommel 1, dem die Gegenschneide 4 im Abstand des Schneidspaltes gegenüber steht. Die Gegenschneide 4 ist elektrisch leitend auf einem stabilen Gegenschneidenträger 5 befestigt, an dem beidseitig die zu einem nicht dargestellten Einstellmechanismus gehörenden verschwenkbaren Arme 6;6' ebenfalls elektrisch Kontakt gebend angeschraubt sind. Diese Arme 6;6' sind in Gelenkpunkten 7;7' als erste elektrische Kontaktstelle zum Häckseltommelgehäuse 8 verschwenkbar aufgenommen, so daß durch deren Verschwenken die Größe des Schneidspaltes veränderbar ist. Da es auf die Mittel zum Verschwenken nicht ankommt, sind auch diese der Einfachheit halber in der Darstellung weggelassen worden. Schließlich ist die Häckseltrommel 1 elektrisch leitend in beidseitig am Häckseltrommelgehäuse 8 angeschraubten Lagern 9;9' aufgenommen. Der bis hierher beschriebene Aufbau der Einstellvorrichtung für den Schneidspalt stellt einen niederohmigen elektrischen Leiterkreis dar, der in der Figur 2 als Ersatzschaltbild aufgezeichnet ist.

In diesem elektrischen Leiterkreis kann man drei getrennte und elektrisch miteinander verbundene Ersatzwiderstände unterscheiden, wobei der erste Ersatzwiderstand 4.1 ; 5.1 die Gegenschneide 4 und den Gegenschneidenträger 5 verkörpert, der zweite Ersatzwiderstand 1.1 ; 2.1 die Häckseltrommel 1 mit den Häckselmessern 2 und der dritte Ersatzwiderstand 8.1 das Häckseltrommelgehäuse 8, die über die als elektrische Leiter fungierenden Arme 6;6' miteinander verbunden sind. Die beim Heranstellen der Gegenschneide 4 an die Häckselmesser 2 zur Minimierung des Schneidspaltes irgendwo über die Breite der Häckseltrommel 1 gesehen auftretende Kontaktstelle 10 ist in Figur 2 als Schalter 10.1 dargestellt. Da der Ort der Kontaktstelle 10 über die Breite der Häckseltrommel 1 mit den Häckselmessem 2 sowie auch über die Breite der Gegenschneide 4 und den Gegenschneidenträger 5 betrachtet veränderlich ist, sind die Ersatzwiderstände 4.1 ; 5.1 bzw. 1.1 ; 2.1 als Potentiometer ausgeführt.

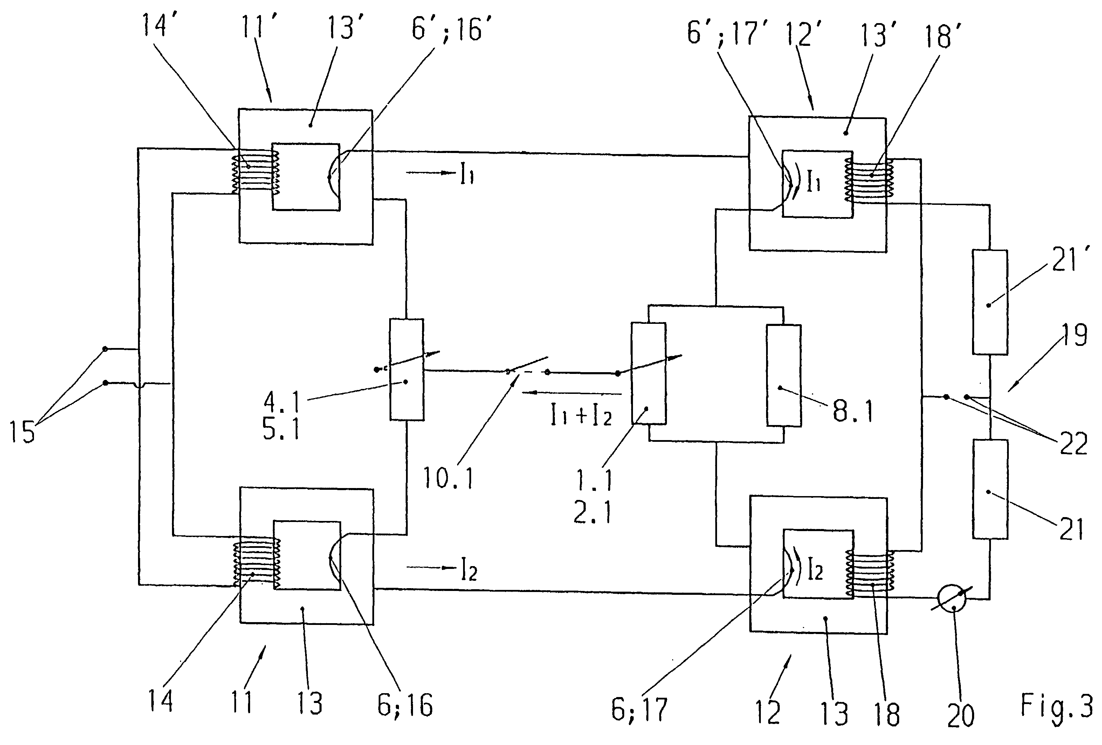

In Figur 1 ist zu sehen, daß um jeden der beiden Arme 6;6'des Einstellmechanismus ein magnetischer Sendekreis 11;11' und ein magnetischer Empfangskreis 12;12' angeordnet sind. Das Ersatzschaltbild für das Zusammenwirken des elektrischen Leiterkreises mit den magnetischen Sendekreisen 11;11' sowie den magnetischen Empfangskreisen 12;12'ist in der Figur 3 wiedergegeben. Dort ist zu erkennen, daß die wie ein Transformator funktionierenden magnetischen Sendekreise 11;11' aus je einem geschlossenen Weicheisen- bzw. Ferritkern 13;13' bestehen, um die auf ihren Primärseiten eine Sendespule 14 bzw. 14' in der gleichen Art und Weise gewickelt sind. Beide Sendespulen 14 und 14' sind völlig gleich aufgebaut und symmetrisch miteinander verschaltet. Sie werden von einer gemeinsamen Wechselstromquelle 15 gespeist, so daß ihre Magnetflüsse in entgegengesetzten Richtungen verlaufen. Die Sekundärseiten der magnetischen Sendekreise 11;11' bilden die Arme 6;6' als Teilstücke des elektrischen Leiterkreises selbst, die in Figur 3 symbolisch als um die Weicheisen- bzw. Ferritkerne 13;13' gelegte Windungen 16 bzw. 16' dargestellt sind. Sie sind symmetrisch geschaltet, so daß die magnetischen Sendekreise 11 und 11 bezüglich ihrer Windungsdaten auf der Primär- und der Sekundärseite völlig gleich aufgebaut sind. Damit sind die in den Armen 6;6' induzierten Spannungen auf den elektrischen Leiterkreis bezogen entgegengesetzt ausgerichtet.
Die ebenfalls wie ein Transformator funktionierenden magnetischen Empfangskreise 12;12' bestehen auch aus je einem Weicheisen- bzw. Ferritkern 13;13', deren Primärseiten von den Armen 6;6' als Teilstücke des elektrischen Leiterkreises gebildet werden, die in Figur 3 symbolisch als um die Weicheisen- bzw. Ferritkerne 13;13' gelegte Windungen 17;17' dargestellt sind. Ihre Eingänge sind symmetrisch miteinander verschaltet, so daß deren Magnetflüsse im Falle eines Stromflusses im elektrischen Leiterkreis entgegengesetzt ausgerichtet sind. Auf deren Sekundärseite befinden sich Empfangsspulen 18 bzw. 18' gleichen Aufbaus, die jedoch unsymmetrisch miteinander verschaltet sind, wodurch die in ihnen induzierten Spannungen im Falle eines Stromflusses im elektrischen Leiterkreis gleich ausgerichtet sind. Der so gebildete Meßkreis 19 ist als Brükkenschaltung ausgebildet, in dem sich ein Strommesser 20, zwei gleich große Brückenwiderstände 21 bzw. 21' sowie ein die über die Brücke anliegende Ausgangsspannung messender Spannungsmesser 22 befinden.

### Bezugszeichenaufstellung

- 1: Häckseltrommel
- 1.1: zweiter Ersatzwiderstand
- 2: Häckselmesser
- 2.1: zweiter Ersatzwiderstand
- 3: Rotationskreis
- 4: Gegenschneide
- 4.1: erster Ersatzwiderstand
- 5: Gegenschneidenträger
- 5.1: erster Ersatzwiderstand
- 6;6': Arm
- 7;7': Gelenkpunkt
- 8: Häckseltrommelgehäuse
- 8.1: dritter Ersatzwiderstand
- 9;9': Lager
- 10: Kontaktstelle
- 10.1: Schalter
- 11;11': magnetischer Sendekreis
- 12;12': magnetischer Empfangskreis
- 13;13': Weicheisen- bzw. Ferritkern
- 14;14': Sendespule
- 15: Wechselstromquelle
- 16;16': Windung
- 17;17': Windung
- 18;18': Empfangsspule
- 19: Meßkreis
- 20: Strommesser
- 21;21': Brückenwiderstand
- 22: Spannungsmesser
- I₁;I₂: Stromrichtungspfeile

## Patentansprüche

1. Einstellvorrichtung für den Schneidspalt an Häckslern, insbesondere Feldhäckslern, mit:
- einer mit Häckselmessern (2) besetzten Häckseltrommel (1),
- einer einen Schneidspalt zum Rotationskreis (3) der Häckselmesser (2) aufweisenden Gegenschneide (4),
- einem Einstellmechanismus für den Schneidspalt
- einem wenigstens die Häckseltrommel (1), die Gegenschneide (4), den Gegenschneidenträger (5) und den Einstellmechanismus aufnehmenden Häckseltrommelgehäuse (8),
**dadurch gekennzeichnet, daß**
a) die Gegenschneide (4) gegebenenfalls unter Einbeziehung des Gegenschneidenträgers (5) über die beiden Arme (6;6') des Einstellmechanismus und danach einerseits über das Häckseltrommelgehäuse (8) sowie andererseits über die mit den Häckselmessern (2) besetzte Häckseltrommel (1) elektrisch leitend zu einem elektrischen Leiterkreis verbunden sind,
b) im Bereich jedes Armes (6;6') ein wie ein Transformator funktionierender magnetischer Sendekreis (11;11') angeordnet ist, deren Primärseiten als symmetrisch miteinander verschaltete Sendespulen (14;14') ausgebildet sind, die gleich aufgebaut und so gepolt sind, daß deren Magnetflüsse beim Anliegen einer Wechselstromquelle (15) entgegengesetzt ausgerichtet sind,
c) die Sekundärseiten der magnetischen Sendekreise (11;11') von den Armen (6;6') als Teilstücke des elektrischen Leiterkreises selbst gebildet werden, in denen die induzierten Spannungen entgegengesetzt ausgerichtet sind,
d) im Bereich jedes Armes (6;6') ein wie ein Transformator funktionierender magnetischer Empfangskreis (12; 12') angeordnet ist, deren Primärseiten von den Armen (6;6') als Teilstücke des elektrischen Leiterkreises selbst gebildet werden, deren Magnetflüsse im Falle eines Stromflusses im elektrischen Leiterkreis entgegengesetzt ausgerichtet sind,
e) die Sekundärseiten der magnetischen Empfangskreise (12; 12') als unsymmetrisch miteinander verschaltete Empfangsspulen (18;18') ausgebildet sind, die gleich aufgebaut und so gepolt sind, daß die in ihnen induzierten Spannungen im Falle eines Stromflusses im elektrischen Leiterkreis gleichgerichtet sind,
f) die Sekundärseiten der magnetischen Empfangskreise (12;12') als Meßkreise (19) ausgebildet sind, in denen sich eine Brückenschaltung mit zwei gleich großen Brückenwiderständen (21;21'), ein Spannungsmesser (22) und ein Strommesser (20) befinden.

2. Einstellvorrichtung nach Anspruch 1, **dadurch gekennzeichnet, daß** die Wechselstromquelle (15) in den Primärseiten der magnetischen Sendekreise (11;11') eine Frequenz von wenigstens 150 Kilohertz aufweist.

3. Einstellvorrichtung nach den Ansprüchen 1 und 2, **dadurch gekennzeichnet, daß** alle Querschnitte der Arme 6 und 6' des Einstellmechanismus in Bezug auf die Größe der Querschnittsfläche und deren Form gleich sind.

4. Einstellvorrichtung nach den Ansprüchen 1 bis 3, **dadurch gekennzeichnet, daß** die Anordnung des magnetischen Sendekreises (11) und des magnetischen Empfangskreises (12) auf dem Arm (6) symmetrisch zur Anordnung des magnetischen Sendekreises (11') und des magnetischen Empfangskreises (12') auf dem Arm (6') ist.

5. Einstellvorrichtung nach den Ansprüchen 1 bis 4, **dadurch gekennzeichnet, daß** die über die Brücke im Meßkreis (19) anliegende Ausgangsspannung sowie der im Meßkreis (19) fließende Strom Steuergrößen für den Bewegungsablauf eines automatisch arbeitenden Einstellmechanismus für den Schneidspalt sind.

6. Einstellvorrichtung nach den Ansprüchen 1 bis 5, **dadurch gekennzeichnet, daß** an der Häckseltrommel (1) ein einem Häckselmesser (2) zugeordneter Permanentmagnet befestigt ist und daß sich im Bereich seiner Rotationsebene am Gegenschneidenträger (5) ein Magnetfeldsensor befindet.

## Claims

1. An adjusting device for the cutter gap on crop choppers, in particular forage harvesters, with:
- a chopper cylinder (1) equipped with chopping knives (1),
- a counter-cutter blade (4) exhibiting a cutter gap to the rotational circle (3) of the chopping knives (2),
- an adjusting mechanism for the cutter gap
- a chopper cylinder casing containing at least the chopper cylinder (1), the counter-cutter blade (4), the counter-cutter blade support (6) and the adjusting mechanism (8),
**characterised in that**
a) the counter-cutter blade (4) if necessary with the involvement of the counter-cutter blade support (5) over the two arms (6;6') of the adjusting mechanism and then on the one hand via the chopper cylinder casing (8) and on the other hand via the chopper cylinder (1) fitted with chopping knives (2) they are electrically connected to an electrically conducting circuit,
b) in the region of each arm (6;6') a magnetic transmitting circuit (11;11') functioning as a transformer is arranged, the primary sides of which are formed as transmitter coils (14;14') connected with each other symmetrically, which are constructed the same and are polarised such that their magnetic fluxes on application of an alternating current source (15) are directed in opposite directions,
c) the secondary sides of the magnetic transmitting circuits (11;11') of the arms (6;6') are formed as parts of the electrically conducting circuit itself, in which the induced voltages are directed in opposite directions,
d) in the region of each arm (6;6') a magnetic receiving circuit (12;12') functioning as a transformer is arranged, the primary sides of the arms (6;6') of which are formed as a parts of the electrically conducting circuit itself, the magnetic fluxes of which in the case of a current flow in the electrically conducting circuit are directed in opposite directions,
e) the secondary sides of the magnetic receiving circuits 12; 12') are formed as asymmetrically connected receiving coils (18;18'), which are constructed the same and are polarised such that the voltages induced in them in the case of a current flow in the electrically conducting circuit are directed in the same direction,
f) the secondary sides of the magnetic receiving circuits 12;12') are formed as measuring circuits (19), in which there are situated a bridge circuit with two equal bridge resistances (21;21'), a voltmeter (22) and a current meter (20).

2. An adjusting device in accordance with claim 1, **characterised in that** the alternating current source (15) in the primary sides of the magnetic transmitting circuits (11;11') exhibits a frequency of at least 150 kilohertz.

3. An adjusting device in accordance with claims 1 and 2, **characterised in that** all cross-sections of the arms 6 and 6' of the adjusting mechanism in respect of the magnitude of the cross-sectional area and their shape are equal.

4. An adjusting device in accordance with claims 1 to 3, **characterised in that** the arrangement of the magnetic transmitting circuit (11) and of the magnetic receiving circuit (12) on the arm (6) is symmetrical to the arrangement of the magnetic transmitting circuit (11') and of the magnetic receiving circuit (12') on the arm (6').

5. An adjusting device in accordance with claims 1 to 4, **characterised in that** the output voltage applied across the bridge in the measuring circuit (19) and the current flowing in the measuring circuit (19) are control parameters for the course of movement of an automatically operating adjusting mechanism for the cutter gap.

6. An adjusting device in accordance with claims 1 to 5 **characterised in that** on the chopper cylinder (1) a permanent magnet assigned to one chopping knife (2) is fixed and that in the region of its plane of rotation on the counter-cutter blade support (5) a magnetic field sensor is located.

## Revendications

1. Dispositif de réglage de l'intervalle de coupe de hacheurs, en particuliers des récolteuses-hacheuses-chargeuses, avec:
- un tambour hacheur (1) équipé de lames tranchantes (2)
- un contre-couteau (4) avec un intervalle de coupe (5) pour le cercle de rotation (3) des lames tranchantes (2)
- un mécanisme de réglage (7) pour l'intervalle de coupe
- un carter de tambour hacheur (10) comprenant au moins le tambour hacheur (1), le contre-couteau (4), le support du contre-couteau (5) et le mécanisme de réglage (7)
**caractérisé en ce que**
a) le contre-couteau (4), éventuellement en faisant intervenir le support de contre-couteau (5) sont reliés par les deux bras (6;6') du mécanisme de réglage et ensuite, d'une part, par le carter de tambour hacheur (8) de même que, d'autre part, par le tambour hacheur (1), occupé par les lames tranchantes (2), à un circuit conducteur électrique de manière à faire passer le courant,
b) dans la zone de chaque bras (6;6'), un circuit transmetteur magnétique fonctionnant comme un transformateur est monté dont les côtés primaires ont la forme de bobines émettrices (14;14') montées symétriquement l'une par rapport à l'autre, bobines qui ont la même structure et sont polarisées de manière à ce que leur flux magnétique soit dirigé en sens contraire en cas d'application d'une source de courant alternatif (15),
c) les cotés secondaires des circuits transmetteurs magnétiques (11;11') sont formés par les bras (6;6') en tant qu'éléments partiels du circuit conducteur électrique dans lesquels les tensions induites sont dirigées en sens contraire,
d) dans la zone de chaque bras (6;6'), un circuit récepteur magnétique (12;12') fonctionnant comme un transformateur est monté, dont les côtés primaires sont formés par les bras (6;6') en tant qu'éléments partiels du circuit conducteur électrique proprement dit, dont les flux magnétiques, en cas de passage du courant dans le circuit conducteur électrique, sont dirigés en sens contraire,
e) les côtés secondaires des circuits récepteurs électriques (12; 12') sont formés comme des bobines réceptrices montées symétriquement l'une par rapport à l'autre (18;18'), bobines de même structure et polarisées de manière à ce que les tensions induites dans celles-ci soient redressées dans le circuit conducteur électrique en cas de passage de courant,
f) les côtés secondaires des circuits récepteurs magnétiques (12;12') sont formés comme des circuits de mesure (19) dans lesquels se trouve un montage en pont avec deux résistances de pont (21;21') de même grandeur, un voltmètre (22) et un ampèremètre (20).

2. Dispositif de réglage selon la revendication 1, **caractérisé en ce que** la source de courant alternatif (15) présente, aux côtés primaires des circuits transmetteurs magnétiques (11;11'), une fréquence de 150 kilohertz au moins.

3. Dispositif de réglage selon les revendications 1 et 2, **caractérisé en ce que** toutes les sections des bras 6 et 6' du mécanisme de réglage sont identiques en relation avec la grandeur de la surface de la section et sa forme.

4. Dispositif de réglage selon les revendications 1 à 3, **caractérisé en ce que** l'agencement du circuit émetteur magnétique (11) et du circuit récepteur magnétique (12) sur le bras 8 (6) est symétrique par rapport à l'agencement du circuit émetteur magnétique (11') et du circuit récepteur magnétique (12') sur le bras 8 (6').

5. Dispositif de réglage selon les revendications 1 à 4, **caractérisé en ce que** la tension de sortie appliquée au pont dans le circuit de mesure (19) ainsi que le courant passant dans le circuit de mesure (19) sont des grandeurs de commande pour le mouvement d'un mécanisme de réglage fonctionnant de manière automatique pour l'intervalle de coupe.

6. Dispositif de réglage selon les revendications 1 à 5, **caractérisé en ce que** un aimant permanent correspondant à une lame tranchante (2) est fixé sur le tambour hacheur (1) et qu'un capteur à champ magnétique se trouve dans la zone de son plan de rotation sur le support de contre-couteau (5).
